# EUROPEAN PATENT APPLICATION

(11) **EP 4 621 806 A1**
(43) Date of publication of application: **24.09.2025**
(21) Application number: 22965707.7
(22) Date of filing: 14.11.2022
(51) Int. Cl.: H01B 1/06, H01M 10/0562

(54) **SOLID ELECTROLYTE AND LITHIUM ION BATTERY**

(71) Applicant: NGK Insulators, Ltd., Nagoya city, Aichi 467-8530 (JP)
(72) Inventor: YAGI, En, Nagoya-city, Aichi 467-8530 (JP); TAKAHASHI, Haruto, Nagoya-city, Aichi 467-8530 (JP); YOSHIDA, Toshihiro, Nagoya-city, Aichi 467-8530 (JP); MUKOGAWA, Akane, Nagoya-city, Aichi 467-8530 (JP)
(74) Representative: Mewburn Ellis LLP
(86) International application number: PCT/JP2022/042226
(87) International publication number: WO 2024/105730

(57) **Abstract**

A solid electrolyte includes, as a main phase, a monoclinic phase of a compound containing Li, F, and M that is a metallic element(s) other than Li or a metalloid element(s). In an X-ray diffraction pattern obtained by an X-ray diffraction measurement, a content of the monoclinic phase quantitatively determined by an RIR method is higher than or equal to 65%. This provides the solid electrolyte with high safety and high lithium-ion conductivity.

## Description

### TECHNICAL FIELD

The present invention relates to a solid electrolyte and a lithium-ion battery.

### BACKGROUND ART

In recent years, development of solid electrolytes for use in all solid-state batteries has been progressing. For example, Japanese Patent Application Laid-Open No. 2011-129312 (Document 1) discloses a solid electrolyte consisting of a sulfide and an all solid-state battery including the solid electrolyte. Solid electrolytes each consisting of a sulfide may react with moisture in the air and generate toxic hydrogen sulfide gas. In view of this, International Publications No. 2021/161604 (Document 2) and No. 2021/186833 (Document 3) each propose a solid electrolyte of a fluorine compound. Specifically, the solid electrolyte according to Document 2 contains Li, Zr, Al, and F. The solid electrolyte according to Document 3 contains Li, Ti, Al, M, and F, where M is Zr or Mg.

"Theoretical Design of Lithium Chloride Superionic Conductors for All-Solid-State High-Voltage Lithium-Ion Batteries" by Dongsu Park and other seven members (ACS Appl. Mater. Interfaces, 2020, vol. 12, pp. 34806-34814) (Document 4) describes that a monoclinic structure of Li₃MCl₆ has a low migration energy barrier of lithium ions.

Meanwhile, the solid electrolytes of a fluorine compound according to Documents 2 and 3 have improved safety, but their lithium-ion conductivities are of the order of 10⁻⁶ S/cm and insufficient.

### SUMMARY OF THE INVENTION

The present invention is intended for a solid electrolyte, and it is an object of the present invention to provide a solid electrolyte with high safety and high lithium-ion conductivity.

Aspect 1 of the present invention is a solid electrolyte including, as a main phase, a monoclinic phase of a compound containing Li, F, and M that is a metallic element(s) other than Li or a metalloid element(s). In an X-ray diffraction pattern obtained by an X-ray diffraction measurement, a content of the monoclinic phase quantitatively determined by an RIR method is higher than or equal to 65%.

According to the present invention, it is possible to provide the solid electrolyte with high safety and high lithium-ion conductivity.

Aspect 2 of the present invention is the solid electrolyte according to Aspect 1, in which the compound further contains X that is at least one element selected from a group consisting of Cl, Br, and I.

Aspect 3 of the present invention is the solid electrolyte according to Aspect 2, in which M contains Ga.

Aspect 4 of the present invention is the solid electrolyte according to Aspect 2 or 3, in which the compound is expressed by a composition formula of Li₃MF₆₋ₐXₐ, where 0 < a < 6 is satisfied.

Aspect 5 of the present invention is the solid electrolyte according to Aspect 2 or 3, in which M contains Mα serving a trivalent cation, and Mβ serving as a tetravalent cation, and the compound is expressed by a composition formula of Li_{3-b}Mα_{1-b}Mβ_{b}F₆₋ₐXₐ, where 0 < a < 6 and 0 < b < 1 are satisfied.

Aspect 6 of the present invention is the solid electrolyte according to any one of Aspects 1 to 5, in which M contains Zr.

Aspect 7 of the present invention is a lithium-ion battery including the solid electrolyte according to any one of Aspects 1 to 6.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a longitudinal sectional view showing an all solid-state lithium-ion secondary battery.
Fig. 2 is a diagram showing an X-ray diffraction pattern of solid electrolyte powder.

### DESCRIPTION OF EMBODIMENTS

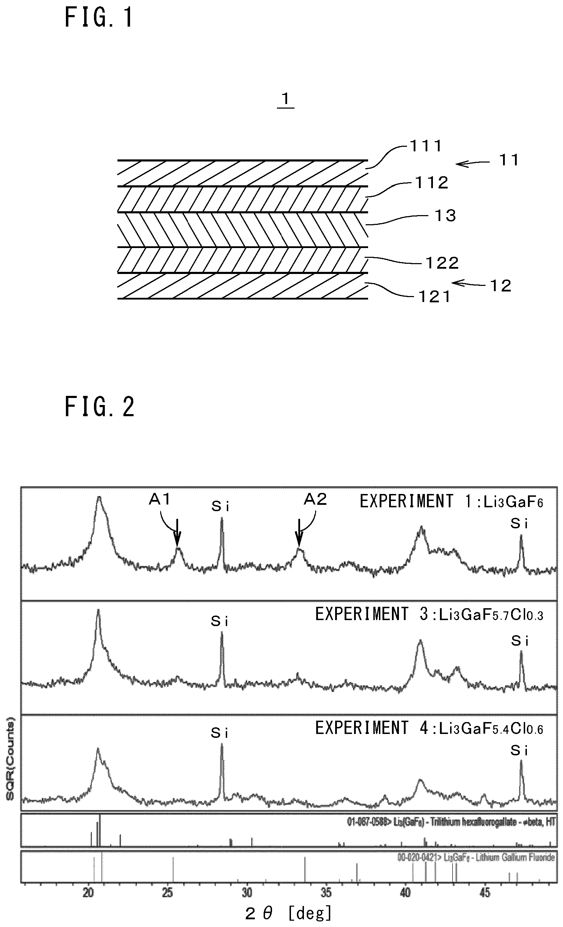

Fig. 1 is a longitudinal sectional view showing an all solid-state lithium-ion secondary battery 1 (hereinafter, simply referred to as the "all solid-state secondary battery 1"). The all solid-state secondary battery 1 includes a positive electrode 11, an electrolyte layer 13, and a negative electrode 12 in order from the top of Fig. 1. That is, the electrolyte layer 13 is provided between the positive electrode 11 and the negative electrode 12. The electrolyte layer 13 is a solid electrolyte layer and serves also as a separator layer. The positive electrode 11 includes a current collector 111 and a positive electrode layer 112. The positive electrode layer 112 includes a positive active material. The negative electrode 12 includes a current collector 121 and a negative electrode layer 122. The negative electrode layer 122 includes a negative active material.

The positive active material of the positive electrode layer 112 may preferably contain a lithium complex oxide. A preferable positive active material may be a lithium complex oxide having a layered rock-salt structure and may, for example, be NCM (Li(Ni,Co,Mn)O₂). The positive active material may also be any other lithium complex oxide and may, for example, be NCA (Li(Ni,Co,Al)O₂) or LCO (LiCoO₂) having a layered rock-salt structure, LNMO (LiNi_{0.5}Mn_{1.5}O₄) having a spinel structure, or LFP (LiFePO₄) having an olivine structure. The positive electrode layer 112 further includes, in addition to the positive active material, a solid electrolyte described later and an electron conductive agent (e.g., carbon black). The positive electrode layer 112 according to the present embodiment is formed by integrating these substances by pressurization or heating.

Examples of the negative active material of the negative electrode layer 122 include compounds such as LTO (Li₄Ti₅O₁₂), NTO (Nb₂TiO₇), titanium oxide (TiO₂), graphite, and silicon monoxide (SiO). The negative electrode layer 122 includes, in addition to the negative active material, a solid electrolyte described later. The negative electrode layer 122 may further include an electron conductive agent (e.g., carbon black). The negative electrode layer 122 according to the present embodiment is formed by integrating these substances by pressurization or heating.

The configurations and materials of the positive electrode 11 and the negative electrode 12 of the all solid-state secondary battery 1 are not limited to the examples described above, and may be any of various configurations and materials.

The electrolyte layer 13 may be a solid electrolyte according to the present invention (hereinafter, also referred to as the "present solid electrolyte"), or may include the present solid electrolyte. The solid electrolyte is a lithium (Li)-ion conductive material. The solid electrolyte contains a lithium element (Li), a fluorine element (F), and an element(s) (M) that is a metallic element(s) other than Li or a metalloid element(s). M may only be one type of element, or may include two or more types of elements. One example of M is an element serving as a trivalent cation. M may preferably contain gallium (Ga) and may only be Ga. M may contain, together with Ga, any other element(s) serving as a trivalent cation, and one example of the element(s) is aluminum (Al). Typically, the solid electrolyte does not contain sulfide and thus does not generate hydrogen sulfide gas. This provides the all solid-state secondary battery 1 with high safety.

In the specification of the present invention, the metalloid element(s) refers to boron (B), silicon (Si), germanium (Ge), arsenic (As), antimony (Sb), or tellurium (Te). The metallic element(s) refers to an element(s) included in the first to twelfth groups of the periodic table, except hydrogen, and an element(s) included in the thirteenth to sixteenth groups of the periodic table, except the above-described metalloid and C, N, P, O, S, and Se. That is, the metallic element(s) refers to an element group that may serve as cations when forming a halogen compound and an inorganic compound.

The present solid electrolyte includes, as a main phase, a monoclinic phase of a compound containing Li, M, and F. In an X-ray diffraction pattern of the solid electrolyte obtained by an X-ray diffraction (XRD) measurement, a content of the monoclinic phase quantitatively determined by an RIR method is higher than or equal to 65%. As will be described later, this solid electrolyte achieves high lithium-ion conductivity of greater than or equal to 1 × 10⁻⁵ S/cm. Details of the X-ray diffraction pattern will be described later.

The above-described compound may further contain X that is at least one element selected from a group consisting of chlorine (Cl), bromine (Br), and iodine (I). More preferably, X may contain Cl, or may only be Cl. Typically, X substitutes for part of F in the above-described compound. For example, the amount of substance of X in the compound is less than or equal to the amount of substance of F, but it may be greater than the amount of substance of F.

In a preferable solid electrolyte, the above-described compound is expressed by a composition formula of:

Li₃MF₆₋ₐXₐ, ... (1)

where 0 < a < 6 is satisfied. Composition Formula (1) may more preferably satisfy 0.05 < a < 2 and yet more preferably satisfy 0.05 < a < 1.5, where "a" may be less than or equal to 1. Here, M is an element serving as a trivalent cation, and may include two or more types of elements (e.g., Ga and Al).

In another preferable solid electrolyte, M described above may include Mα serving as a trivalent cation and Mβ serving as a tetravalent cation. In this case, the above-described compound is expressed by a composition formula of:

Li_{3-b}Mα_{1-b}Mβ_{b}F₆₋ₐXₐ, ... (2)

where 0 < a < 6 and 0 < b < 1 are satisfied. Composition Formula (2) may more preferably satisfy 0.05 < a < 2 and yet more preferably satisfy 0.05 < a < 1.5, where "a" may be less than or equal to 1. In one example of the solid electrolyte, Mα may be Ga, and Mβ may be zirconium (Zr). For example, the amount of substance of Mα in the compound is greater than or equal to the amount of substance of Mβ, but it may be less than the amount of substance of Mβ.

To determine whether an unknown solid electrolyte is expressed by Composition Formula (1) or (2), for example, Li, Ga, Al, and Zr may be quantitatively determined by ICP emission spectroscopy or any other like method. F and Cl may be quantitatively determined by, for example, ion chromatography. In the case where the present solid electrolyte contains an element(s) other than the elements described above, an appropriate measurement method is selected to allow quantitative determination of the element(s).

The molar ratio of Li, M, F, and X in Composition Formula (1) described above, i.e., Li:M:F:X, is 3:1:6-a:a. In the molar ratio obtained by analysis conducted on the unknown solid electrolyte, if the value of Li is greater than or equal to 0.90 × 3 and less than or equal to 1.10 × 3, it is conceivable that Li satisfies Composition Formula (1) described above. The value of Li may more preferably be greater than or equal to 0.95 × 3 and less than or equal to 1.05 × 3. The same applies to M, F, and X. Composition Formula (2) described above is similar to Composition Formula (1) described above, and if each value in the molar ratio of Li, Mα, Mβ, F, and X obtained by analysis is within the range of ±10% (preferably, ±5%) of the values in Composition Formula (2) described above, it is conceivable that Composition Formula (2) described above is satisfied.

The present solid electrolyte may be produced by, for example, the following method. First, fluoride powder containing Li and fluoride powder containing M are prepared. The fluoride powder containing Li may, for example, be lithium fluoride (LiF). In the case where M is Ga, fluoride containing Ga may, for example, be gallium fluoride (GaF₃). In the case where M includes Ga and Al, fluoride containing Al may, for example, be aluminum fluoride (AlF₃). In the case where M includes Ga and Zr, fluoride containing Zr may, for example, be zirconium fluoride (ZrF₄). Each powder described above is weighed and mixed together in a predetermined molar ratio. In the case where the solid electrolyte further contains X, for example, halide (LiX) powder containing Li is prepared and mixed together with the powder described above. The halide (LiX) containing Li may, for example, be lithium chloride (LiCl), lithium bromide (LiBr), or lithium iodide (LiI). As a raw material, halide containing M may be used, and this halide may, for example, be gallium chloride (GaCl₃) or zirconium chloride (ZrCl₄), or may also be bromide containing M or iodide containing M.

Then, a resultant mixture is subjected to a mechanical milling process (mechanochemical milling). In one example of the mechanical milling process, a planetary ball mill may be used. The planetary ball mill is capable of generating very high impact energy because a stage with a pot placed thereon revolves while the pot rotates on its axis. The mechanical milling process may also be conducted using any other type of pulverizer. The mechanical milling process described above produces powder of the present solid electrolyte for use in the positive electrode layer 112, the negative electrode layer 122, and the electrolyte layer 13. In the present example of processing, the mechanical milling process is conducted at ordinary temperatures, but conditions for the mechanical milling process, such as temperature, may be changed appropriately. The present solid electrolyte may also be produced by any other method such as firing other than the mechanical milling process.

Next, experiments on the solid electrolyte are described. The experiments described below were conducted in a glove box with a dew point of -60°C or less in an argon (Ar) atmosphere. Table 1 shows conditions and measurement results for Experiments 1 to 9. Experiments 2 to 9 are examples of the present invention in which the content of the monoclinic phase quantitatively determined by an RIR method is higher than or equal to 65%, and Experiment 1 is a comparative example in which the content of the monoclinic phase is less than 65%. In Table, 1, the column labeled "Composition Formula" indicates also the values for a and b when the solid electrolytes are expressed by a composition formula of Li_{3-b}Ga_{1-b}Zr_{b}F₆₋ₐClₐ (in Experiments 7 to 9, the solid electrolytes further contain Al).

**Table 1**

| | Mixture Ratio of Raw Materials [mol] | | | | | Composition Formula | a | b | Conductivity | X-Ray Diffraction Monoclinic Phase |
|---|---|---|---|---|---|---|---|---|---|---|
| No. | LiF | LiCl | GaF₃ | ZrF₄ | AlF₃ | - | - | - | [S/cm] | [% by mass] |
| Experiment 1 | 3 | 0 | 1 | 0 | 0 | Li₃GaF₆ | 0 | 0 | 2.8E-07 | 63 |
| Experiment 2 | 2.9 | 0.1 | 1 | 0 | 0 | Li₃GaF_{5.9}Cl_{0.1} | 0.1 | 0 | 1.1E-05 | 71 |
| Experiment 3 | 2.7 | 0.3 | 1 | 0 | 0 | Li₃GaF_{5.7}Cl_{0.3} | 0.3 | 0 | 2.8E-04 | 78 |
| Experiment 4 | 2.4 | 0.6 | 1 | 0 | 0 | Li₃GaF_{5.4}Cl_{0.6} | 0.6 | 0 | 1.5E-03 | 82 |
| Experiment 5 | 2 | 1 | 1 | 0 | 0 | Li₃GaF₅Cl | 1 | 0 | 6.3E-04 | 87 |
| Experiment 6 | 2.2 | 0.6 | 0.8 | 0.2 | 0 | Li_{2.8}Ga_{0.8}Zr_{0.2}F_{5.4}Cl_{0.6} | 0.6 | 0.2 | 5.8E-04 | 80 |
| Experiment 7 | 2.4 | 0.6 | 0.8 | 0 | 0.2 | Li₃Al_{0.2}Ga_{0.8}F_{5.4}Cl_{0.6} | 0.6 | 0 | 1.4E-03 | 76 |
| Experiment 8 | 2.4 | 0.6 | 0.5 | 0 | 0.5 | Li₃Al_{0.5}Ga_{0.5}F_{5.4}Cl_{0.6} | 0.6 | 0 | 2.2E-04 | 80 |
| Experiment 9 | 2.4 | 0.6 | 0.3 | 0 | 0.7 | Li₃Al_{0.7}Ga_{0.3}F_{5.4}Cl_{0.6} | 0.6 | 0 | 5.1E-05 | 73 |

### Experiment 1

Commercial LiF powder and commercial GaF₃ powder were prepared as raw materials. Each powder was weighed so that the molar ratio of LiF:GaF₃ became 3:1. A resultant mixture was subjected to a mechanical milling process using a planetary ball mill to obtain solid electrolyte powder.

### Experiment 2

Solid electrolyte powder was obtained by performing the same processing as in Experiment 1, except that commercial LiCl powder was prepared in addition to the LiF powder and the GaF₃ powder, and each powder was weighed so that the molar ratio of LiF:LiCl:GaF₃ became 2.9:0.1:1.

### Experiment 3

Solid electrolyte powder was obtained by performing the same processing as in Experiment 1, except that LiF powder, LiCl powder, and GaF₃ powder were used and weighted so that the molar ratio of LiF:LiCl:GaF₃ became 2.7:0.3:1.

### Experiment 4

Solid electrolyte powder was obtained by performing the same processing as in Experiment 1, except that LiF powder, LiCl powder, and GaF₃ powder were used and weighed so that the molar ratio of LiF:LiCl:GaF₃ became 2.4:0.6:1.

### Experiment 5

Solid electrolyte powder was obtained by performing the same processing as in Experiment 1, except that LiF powder, LiCl powder, and GaF₃ powder were used and weighed so that the molar ratio of LiF:LiCl:GaF₃ became 2:1:1.

### Experiment 6

Solid electrolyte powder was obtained by performing the same processing as in Experiment 1, except that commercial ZrF₄ powder was prepared in addition to the LiF powder, the LiCl powder, and the GaF₃ powder, and each powder was weighed so that the molar ratio of LiF:LiCl:GaF₃:ZrF₄ became 2.2:0.6:0.8:0.2.

### Experiment 7

Solid electrolyte powder was obtained by performing the same processing as in Experiment 1, except that commercial AlF₃ powder was prepared in addition to the LiF powder, the LiCl powder, and the GaF3 powder, and each powder was weighed so that the molar ratio of LiF:LiCl:GaF₃:AlF₃ became 2.4:0.6:0.8:0.2.

### Experiment 8

Solid electrolyte powder was obtained by performing the same processing as in Experiment 1, except that LiF powder, LiCl powder, GaF₃ powder, and AlF₃ powder were used and weighed so that the molar ratio of LiF:LiCl:GaF₃:AlF₃ became 2.4:0.6:0.5:0.5.

### Experiment 9

Solid electrolyte powder was obtained by performing the same processing as in Experiment 1, except that LiF powder, LiCl powder, GaF₃ powder, and AlF₃ powder were used and weighed so that the molar ratio of LiF:LiCl:GaF₃:AlF₃ became 2.4:0.6:0.3:0.7.

### Measurement of Lithium-Ion Conductivity

Each solid electrolyte powder was introduced into a mold that includes a sleeve made of resin and upper and lower punches made of metal, and was subjected to uniaxial press molding by pressurization at 150 MPa. The upper and lower punches were connected to conductors, and impedance measurement was conducted at ambient temperature to calculate lithium-ion conductivity. In Table 1, the lithium-ion conductivity is shown in the column labeled "Conductivity."

### X-ray Diffraction Measurement

An X-ray diffraction pattern for powder obtained by mixing each solid electrolyte powder with additional Si powder serving as an internal standard sample was obtained by an X-ray diffractometer (XRD) to identify a crystal phase. Measurement conductions were CuKα, 40kV, and 40 mA, and a sealed-tube X-ray diffractometer (D8-ADVANCE produced by Bruker AXS Inc.) was used. The measurement was conducted with a step size of 0.02°. In the following description, the integrated intensity of each peak in the X-ray diffraction pattern was calculated by profile fitting using XRD analysis software "JADE" (produced by Materials Data Inc.). The content of the monoclinic phase in the X-ray diffraction pattern was calculated by a reference intensity ratio method (RIR method) using XRD analysis software "EVA" (produced by Bruker AXS Inc.).

Fig. 2 is a diagram showing the X-ray diffraction pattern of each solid electrolyte powder according to Experiments 1, 3, and 4. The uppermost, second, and third sections of Fig. 2 illustrate respectively the X-ray diffraction patterns of the solid electrolyte powder according to Experiments 1, 3, and 4. The fourth section illustrates peaks indicated by a card number of 087-0588 (the monoclinic phase of Li₃GaF₆) in the International Centre for Diffraction Data (ICDD), powder diffraction database, and the lowermost section illustrates peaks indicated by a card number of 020-0421 (an unknown phase of Li₃GaF₆). The unknown phase refers to a phase whose structure is unidentified. Peaks denoted by "Si" in the uppermost, second, and third sections are those resulting from the Si powder serving as the internal standard sample.

The X-ray diffraction patterns for each solid electrolyte powder according to Experiments 1 to 9 include peaks detected at almost the same positions (diffraction angles 2θ) as the peaks indicated by the card number of 087-0588. This confirms that the solid electrolyte powder according to Experiment 1 included the monoclinic phase of a fluorine compound of Li₃GaF₆, and each solid electrolyte powder according to Experiments 2 to 5 contained the monoclinic phase of a compound obtained by substituting Cl for part of F in Li₃GaF₆. It is also confirmed that the solid electrolyte powder according to Experiment 6 included the monoclinic phase of a compound obtained by substituting Zr for part of Ga in Li₃GaF₆ and substituting Cl for part of F. It is further confirmed that each solid electrolyte powder according to Experiments 7 to 9 included the monoclinic phase of a compound obtained by substituting Al for part of Ga in Li₃GaF₆ and substituting Cl for part of F. In the case where M is an element other than Ga, card information about the monoclinic phase of a compound containing the element, Li, and F is used as appropriate.

Each solid electrolyte powder further included, as a main phase, the monoclinic phase of the above-described compound. Here, the monoclinic phase of the compound was assumed to be a main phase if a total sum of the integrated intensities of all peaks belonging to the monoclinic phase of the above-described compound (the compound containing Li, M, and F) was greater than a total sum of the integrated intensities of all remaining peaks not belonging to the monoclinic phase within the range of the diffraction angle 2θ of 10°to 50° in the X-ray diffraction pattern. In the case of the solid electrolytes according to Experiment 1 to 9, peaks belonging to the monoclinic phase of the compound was detected at almost the same positions as the peaks indicated by the card number of 087-0588 (the monoclinic phase of Li₃GaF₆). In other words, the peaks not belonging to the monoclinic phase were detected at different positions from the peaks indicated by the card number of 087-0588.

Then, in the X-ray diffraction pattern of each solid electrolyte powder, the content (% by mass) of the monoclinic phase was calculated by the RIR method. In Experiments 1 to 9, the monoclinic phase was indicated by the card number of 087-0588. A crystal phase not belonging to the monoclinic phase was an unknown phase indicated by the card number of 020-0421. In the RIR method, a pattern obtained by dividing the intensity of each peak of the monoclinic phase indicated by the card number of 087-0588 by an RIR value of the monoclinic phase and a pattern obtained by dividing the intensity of each peak of the unknown phase indicated by the card number of 020-0421 by an RIR value of the unknown phase were synthesized in a ratio of Vm:Vu, and if the synthesized pattern matched (fitted) the X-ray diffraction pattern obtained by measurement, the content of the monoclinic phase was derived from (Vm/(Vm + Vu)). The same applies to the case where the solid electrolyte powder further included any other crystal phase. The RIR value refers to a reference intensity ratio (which may also be represented by I/Ic), and in the calculation of the content, values described in the ICDD card information were used as the RIR values. For example, when the card number was 087-0588, the RIR value was 1.77. In Table 1, the values for the content of the monoclinic phase, calculated by the RIR method, are shown in the column labeled "X-Ray Diffraction."

### Evaluation of Experiments

In the example shown in Fig. 2, a peak detected at diffraction angles 2θ of around 26°and a peak detected at diffraction angles 2θ of around 34° (peaks indicated by arrows A1 and A2 in Fig. 2) are peaks detected in only the unknown phase (see the fourth and lowermost sections of Fig. 2), and the intensities of these peaks decrease in order of Experiments 1, 3, and 4. On the other hand, lithium-ion conductivity increases in order of Experiments 1, 3, and 4 as shown in Table 1. In this way, there is a correlation between the decrease in the peaks at around 26°and 34° and the improvement of the lithium-ion conductivity. In Experiments 1 to 9, there is a correlation between lithium-ion conductivity and the content of the monoclinic phase quantitatively determined by the RIR method. In the experiments described above, Experiments 2 to 9 in which the content of the monoclinic phase was higher than in Experiment 1 exhibited higher lithium-ion conductivity than Experiment 1.

As described previously, the peak at around 26° and the peak at around 34° are included in the peaks distinctively detected in the unknown phase of Li₃GaF₆ indicated by the card number of 020-0421, but are not included in the peaks indicated by the card number of 087-0588 (the monoclinic phase of Li₃GaF₆). Accordingly, it is conceivable that the decreases in the peak at around 26° and the peak at around 34° result in a decrease in the unknown phase and an increase in the content of the monoclinic phase in the crystal structure.

"Theoretical Design of Lithium Chloride Superionic Conductors for All-Solid-State High-Voltage Lithium-Ion Batteries" by Dongsu Park and other seven members (ACS Appl. Mater. Interfaces, 2020, vol. 12, pp. 34806-34814) (Document 4 described above) describes that the monoclinic structure of Li₃MCl₆ has a low migration energy barrier of lithium ions. It is thus conceivable that Li paths are easy to connect in the monoclinic phase of the Li₃MX₆ compound (where M is a metallic element(s) other than Li or a metalloid element(s), and X is a halogen element(s)) from the perspective of the crystal structure. Accordingly, it is presumed that even in fluorine-based solid electrolytes where improving ion conductivity is generally an issue, high ion conductivity is achieved, since the content of the monoclinic phase quantitatively determined by the RIR method is higher than or equal to 65%, i.e., the content of the monoclinic phase is high.

As described above, the present solid electrolyte includes, as a main phase, the monoclinic phase of a compound containing Li, M, and F, where M is a metallic element(s) other than Li or a metalloid element(s). In an X-ray diffraction pattern obtained by an X-ray diffraction measurement, the content of the monoclinic phase quantitatively determined by the RIR method is higher than or equal to 65%. This reduces an unknown phase in the present solid electrolyte and provides the solid electrolyte with a high content of the monoclinic phase and high lithium-ion conductivity. The content of the monoclinic phase may be preferably higher than or equal to 68% and more preferably higher than or equal to 70%. The solid electrolyte assures high safety because it does not contain sulfide and thus does not generate hydrogen sulfide gas.

In a preferable solid electrolyte, M may contain Ga as in Experiments 2 to 9. This more reliably improves lithium-ion conductivity.

Preferably, the above-described compound may further contain X that is at least one element selected from a group consisting of Cl, Br, and I. This more reliably increases the content of the monoclinic phase and ensures high lithium-ion conductivity as in Experiments 2 to 9.

In a preferable solid electrolyte, the compound may be expressed by a composition formula of:

Li₃MF₆₋ₐXₐ ... (1)

where 0 < a < 6 is satisfied. This favorably provides the solid electrolyte with high lithium-ion conductivity. More preferably, 0.05 < a < 2 may be satisfied as in Experiments 2 to 5 and 7 to 9. This more reliably improves the lithium-ion conductivity of the solid electrolyte including the monoclinic phase as a main phase. More preferably, the lower limit for "a" may be 0.1. More preferably, the upper limit for "a" may be 1.

In another preferable solid electrolyte, M may contain Mα serving as a trivalent cation and Mβ serving as a tetravalent cation. The compound may be expressed by a composition formula of:

Li_{3-b}Mα_{1-b}Mβ_{b}F₆₋ₐXₐ ... (2)

where 0 < a < 6 and 0 < b < 1 are satisfied. This favorably provides the solid electrolyte with high lithium-ion conductivity as in Experiment 6.

The present solid electrolyte and the all solid-state secondary battery 1 may be modified in various ways.

As long as the content of the monoclinic phase is higher than or equal to 65%, the present solid electrolyte may not contain X. The compound contained in the solid electrolyte may be expressed by a different composition formula other than Composition Formulas (1) and (2) described above.

The present solid electrolyte may be mixed with any other material (which may contain Li) and used as an electrolyte material. In this case, it is preferable that the present solid electrolyte may have the highest mass ratio among all components contained in the electrolyte material, i.e., the present solid electrolyte may be the principal component. The mass ratio of the principal component in the electrolyte material may be preferably higher than or equal to 50% by mass, more preferably higher than or equal to 60% by mass, and yet more preferably higher than or equal to 70% by mass.

The present solid electrolyte used in the all solid-state secondary battery 1 does not necessarily have to be included in every one of the positive electrode 11, the negative electrode 12, and the electrolyte layer 13, and may be included in at least one of the positive electrode 11, the negative electrode 12, and the electrolyte layer 13. The present solid electrolyte may also be used in batteries other than all solid-state secondary batteries, or may be used for purposes other than batteries.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: all solid-state lithium-ion secondary battery
- 11: positive electrode
- 12: negative electrode
- 13: electrolyte layer

## Claims

1. A solid electrolyte including, as a main phase, a monoclinic phase of a compound containing Li, F, and M that is a metallic element(s) other than Li or a metalloid element(s),
wherein, in an X-ray diffraction pattern obtained by an X-ray diffraction measurement, a content of the monoclinic phase quantitatively determined by an RIR method is higher than or equal to 65%.

2. The solid electrolyte according to claim 1, wherein
said compound further contains X that is at least one element selected from a group consisting of Cl, Br, and I.

3. The solid electrolyte according to claim 2, wherein
M contains Ga.

4. The solid electrolyte according to claim 2, wherein
said compound is expressed by a composition formula of Li₃MF₆₋ₐXₐ,
where 0 < a < 6 is satisfied.

5. The solid electrolyte according to claim 2, wherein
M contains Mα serving a trivalent cation, and Mβ serving as a tetravalent cation, and
said compound is expressed by a composition formula of Li_{3-b}Mα_{1-b}Mβ_{b}F₆₋ₐXₐ,
where 0 < a < 6 and 0 < b < 1 are satisfied.

6. The solid electrolyte according to claim 5, wherein
M contains Zr.

7. A lithium-ion battery comprising:
the solid electrolyte according to any one of claims 1 to 6.
